# EUROPEAN PATENT APPLICATION

(11) **EP 1 775 748 A2**
(43) Date of publication of application: **18.04.2007**
(21) Application number: 06122134.7
(22) Date of filing: 11.10.2006
(51) Int. Cl.: H01J 17/49

(54) **Plasma Display Panel**

(30) Priority: 12.10.2005 KR 20050096231
(71) Applicant: Samsung SDI Co., Ltd., Suwon-si, Gyeonggi-do (KR)
(72) Inventor: SON, Seung-Hyun c/o Samsung SDI Co., LTD, Gyeonggi-do (KR); KIM, Sung-Soo c/o Samsung SDI Co., LTD., Gyeonggi-do (KR)
(74) Representative: Walaski, Jan Filip

(57) **Abstract**

Provided is a plasma display panel (PDP) comprising electron emission members including electron emission amplification layers corresponding to pairs of sustain electrodes so as to reduce a driving voltage for performing a discharge and increase luminescence efficiency.

## Description

The present invention relates to a plasma display panel (PDP), and more particularly, to a PDP comprising an accelerated electron emitter between sustain electrodes to effectively emit electrons in a discharge space so as to provide high brightness and high luminescence efficiency.

Plasma display panels (PDPs) display images using visible light emitted through a process of exciting a phosphor material with ultraviolet rays generated from a discharge of a discharge gas between electrodes when a direct voltage or an alternating voltage is applied to the electrodes.

PDPs are classified into DC type panels and AC type panels according to discharge types. Also, PDPs are classified into facing discharge type panels and surface discharge type panels according to the arrangement of electrodes.

However, conventional PDPs generate ultraviolet rays by ionizing the discharge gas and allowing excited xenon (Xe*) to stabilize by performing a plasma discharge. Therefore, conventional PDPs have a high driving voltage and low luminescence efficiency since a large amount of energy is necessary to ionize the discharge gas.

According to one aspect of the present invention, there is provided a PDP comprising: first and second substrates separated by a predetermined distance and facing each other to form a discharge space therebetween; a plurality of barrier ribs interposed between the first and second substrates and partitioning the discharge space into discharge cells; a plurality of pairs of sustain electrodes; address electrodes crossing the plurality of pairs of sustain electrodes; electron emission members comprising electron emission amplification layers to amplify the emission of electrons in the discharge cells being formed, and corresponding to the plurality of pairs of sustain electrodes; phosphor layers formed in the discharge cells; and a discharge gas in the discharge cells.

The plurality of pairs of sustain electrodes may be parallel to one another and disposed in the barrier ribs.

The electron emission members may have the same width as the sustain electrodes, and the sustain electrodes may comprise bus electrodes, and the electron emission members may have the same width as the bus electrodes.

Another embodiment refers to a PDP comprising a first substrate and a second substrate spaced apart from each other with a discharge space therebetween; a plurality of barrier ribs interposed between the first and second substrates and partitioning the discharge space into a plurality of discharge cells; first discharge electrodes disposed on the first substrate; second discharge electrodes disposed on the second substrate and crossing the first electrodes; electron emission members comprising electron emission amplification layers to amplify the emission of electrons in discharge cells being formed corresponding to one of the first and second discharge electrodes; phosphor layers arranged in the discharge cells; and a discharge gas in the discharge cells.

The electron emission amplification layers may have any of the following characteristics: be oxidized porous silicon (OPS) layers, have a metal-insulator-metal (MIM) structure, be formed of a boron nitride bamboo shoot (BNBS), be formed of carbon nanotubes (CNTs), and further comprise emission electrodes disposed on the electron emission amplification layers.

The phosphor layers may include a quantum dot (QD).

The above and other features and advantages of embodiments of the present invention will become more apparent by describing in detail exemplary embodiments thereof with reference to the attached drawings in which:
FIG. 1 is an exploded perspective view of a plasma display panel (PDP) according to an embodiment;
FIG. 2 is a cross-sectional view of the PDP of FIG. 1 taken along line II-II in FIG. 1;
FIG. 3 is a cross-sectional view of a PDP according to another embodiment;
FIG. 4 is a cross-sectional view of a PDP according to another embodiment;
FIG. 5 is a cross-sectional view of a PDP according to another embodiment;
FIG. 6A is a cross-sectional view of a PDP on which a test to determine luminous efficiency according to beam current density was performed;
FIG 6B is a graph of the results of the test performed on the PDP illustrated in FIG. 6A;
FIGS. 7A through 7G illustrate various arrangements of electron emission members used for simulations for determining luminescence efficiency when an electronic beam having a current density of 1mA/cm² is continuously emitted from the electron emission members;
FIG 7H is a graph of the results of the simulation performed with the arrangements illustrated in FIGS. 7A through 7G;
FIG. 8A illustrates an arrangement of electron emission members used for simulation for determining luminous efficiency, the electrons being emitted from the electron emission member which is of negative voltage above the predetermined voltage;
FIG 8B is a graph of the results of the test performed on the PDP illustrated in FIG. 8A;
FIG. 9 is a graph of luminescence efficiency according to discharge firing voltage when an electron beam having a current density of 100 mA/cm² and emitted from the electron emission member to which more than 3V/µm of an electric field is applied in the alternating current type PDP illustrated in FIG. 8A is used and when no electron beam is used;
FIG. 10 is a cross-sectional view of a PDP according to another embodiment;
FIG. 11 is a cross-sectional view of a PDP according to another embodiment;
FIG. 12 is a cross-sectional view of a PDP according to another embodiment;
FIG. 13 is a cross-sectional view of a PDP according to another embodiment;
FIG. 14 is a cross-sectional view of a PDP according to another embodiment;
FIG. 15 is a cross-sectional view of a PDP according to another embodiment;
FIG. 16 is a cross-sectional view of a PDP according to another embodiment; and
FIG. 17 is a cross-sectional view of a PDP according to another embodiment.

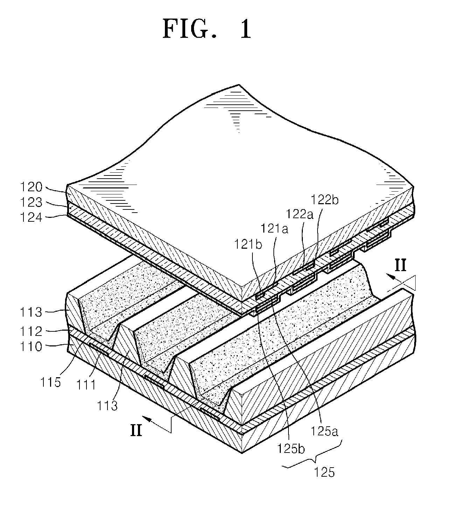

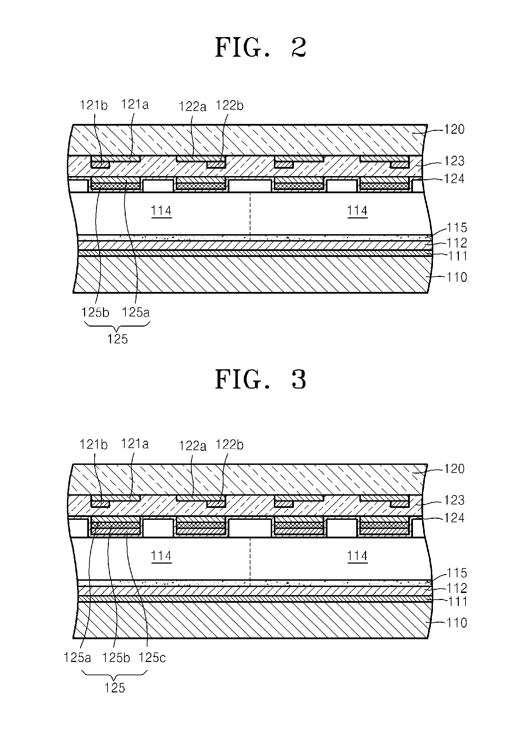

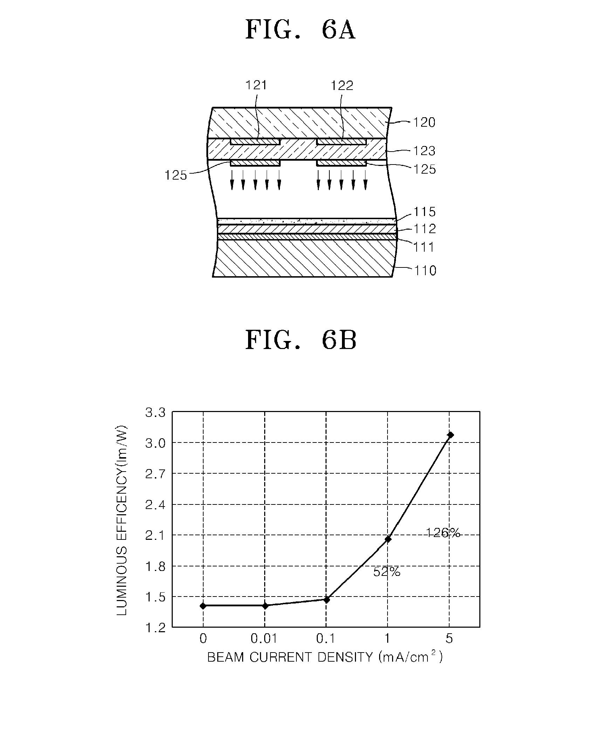

FIG. 1 is an exploded perspective view of a plasma display panel (PDP) according to an embodiment. FIG. 2 is a cross-sectional view of the PDP of FIG. 1 taken along line II-II in FIG. 1. Referring to FIGS. 1 and 2, the PDP comprises a first substrate 110, a second substrate 120, barrier ribs 113, X and Y sustain electrodes 121 and 122 (see FIG. 6A), a first dielectric layer 112, address electrodes 111, a second dielectric layer 123, phosphor layers 115, a protective layer 124, and electron emission members 125.

The first substrate 110 and the second substrate 120 are separated by a predetermined distance and face each other to form a discharge space. The second substrate 120 is formed of a transparent material such as glass to transmit visible light. However, the present embodiments are not limited thereto. For example, the first substrate 110 can be formed of a transparent material, or both the first substrate 110 and the second substrate 120 can be formed of a transparent material. Also, the first substrate 110 and the second substrate 120 can be formed of a translucent material and comprise a colour filter. Therefore, the present embodiments can be applied to a backlit PDP or a reflective PDP in which visible light generated by projecting vacuum ultraviolet (VUV) rays from an excited discharge gas onto the phosphor layers 115 is reflected as well.

The barrier ribs 113 partition the discharge space between the first substrate 110 and the second substrate 120 into discharge cells as basic units of an image, and prevents cross talk between discharge cells. The barrier ribs 113 can have rectangular cross-sections, but the present embodiments are not limited thereto. For example, the barrier ribs 113 can have cross-sections in the shape of ovals, circles, or polygons such as hexagons, octagons, etc.

The X and Y sustain electrodes 121 and 122 are parallel to one another on the bottom surface of the second substrate 120. The X electrodes 121 each include a transparent electrode 121a and a bus electrode 121b, and the Y electrodes 122 each include a transparent electrode 122a and a bus electrode 122b. The transparent electrodes 121a and 122a are formed of a transparent material such as indium tin oxide (ITO) to transmit visible light. However, ITO has high electrical resistance and causes a large voltage drop, and thus cannot itself apply a constant driving voltage to all discharge cells. Therefore, to supplement the transparent electrodes 121a and 122a, the bus electrodes 121b and 122b that have narrower widths and greater electrical conductivity than the transparent electrodes 121a and 122a are disposed on the transparent electrodes 121a and 122a and electrically connected to the transparent electrodes 121a and 122a, but the present embodiments are not limited thereto. In an embodiment, the PDP includes transparent electrodes not formed of ITO and excludes bus electrodes.

In the backlit PDP, the X and Y electrodes 121 and 122 are not transparent electrodes, and are formed of an opaque and electrically conductive material such as Cu, Al, or the like, however, there is no particular restriction to an electrode material in this case.

The first dielectric layer 112 covers the address electrodes 111 and is formed of a material having high resistance since it is used to insulate the address electrodes 111. The first dielectric layer 112 does not need to transmit visible light, and thus, does not need to be formed of a material having high light transmittance, whereas the second dielectric layer 123 transmits visible light. The second dielectric layer 123 covers the X and Y electrodes 121 and 122 disposed on the second substrate 120, and insulates the X and Y electrodes 121 and 122. Thus, the second dielectric layer 123 is formed of a material having high resistance and high light transmittance. The protective layer 124 covers the second dielectric layer 123 and discharges secondary electrons to facilitate the discharge.

The protective layer 124 is formed of magnesium oxide (MgO). The protective layer 124 covers the surface of the electron emission members 125 and the second dielectric layer 123 but the present embodiments are not limited thereto. In detail, the protective layer 124 can be disposed on a dielectric layer on which the electron emission members 125 are not formed, or on the electron emission members 125.

The phosphor layers 115 cover inner walls of discharge cells 114 partitioned by the barrier ribs 113 and the first dielectric layer 112, and provide photoluminescence (PL) by emitting visible light when electrons excited by absorbed VUV rays generated by the discharge are stabilized. The phosphor layers 115 include red, green, blue phosphor layers such that the PDP can display a colour image. A combination of three adjacent discharge cells including the red, green, and blue phosphor layers constitute a unit pixel. The phosphor layers 115 can be formed of at least one of a PL phosphor layer that generates visible light when atoms receive energy in a region of ultraviolet rays and are stabilized, a cathodoluminescence (CL) phosphor layer, and a quantum dot (QD). The CL phosphor layer or the QD can be arranged in the discharge cells 114 when an electron beam is directly radiated from the electron emission members 125, and the PL phosphor layer can be arranged in the discharge cells 114 when an electronic beam is not directly radiated from the electron emission members 125.

In particular, there is no interference between atoms in the QD when the QD receives energy from the outside. Therefore, since the discharge gas can be excited using low energy, the PDP of the present embodiments can have increased luminescence efficiency, perform a printing process, and be large-sized.

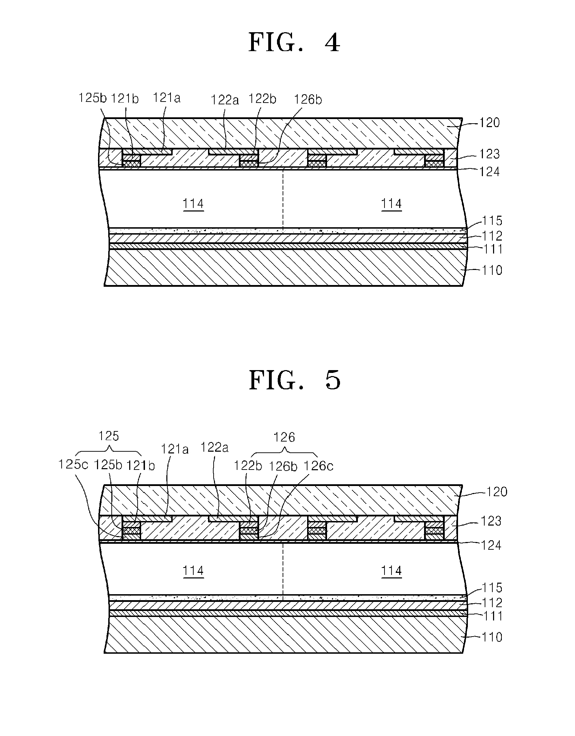

Each of the electron emission members 125 comprises a base electrode 125a disposed on the bottom surface of the second dielectric layer 123 and an electron emission amplification layer 125b that is formed on the bottom surface of the base electrode 125a and has the same width as the base electrode 125a. The base electrodes 125a correspond to the X and Y electrodes 121 and 122, are formed on the bottom surface of the second dielectric layer 123, and can have the same width as the X and Y electrodes 121 and 122. For example, referring to FIG. 2, the base electrodes 125a correspond to the transparent electrodes 121a and 122a, and can be formed on the bottom surface of the second dielectric layer 123 with the same width as the transparent electrodes 121a and 122a. If the electron emission amplification layers 125b are formed on the bus electrodes 121b and 122b as depicted in FIG. 4, then the base electrodes are not required since the bus electrodes 121b and 122b serve as cathode electrodes. As will be described later, the structure of the electron emission members 125 is useful for transmitting visible light in the reflective PDP.

The base electrodes 125a serve as cathode electrodes and provide electrons to the electron emission amplification layers 125b. The base electrodes 124a can be formed of one of ITO, Al, Ag, etc. Referring to FIGS. 2 through 5, the base electrodes 125a of the reflective PDP may be formed of a transparent material to transmit visible light.

The electron emission amplification layers 125b accelerate or amplify the electrons from the base electrodes 125a. The electron emission amplification layers 125b may be oxidized porous silicon (OPS) layers. OPS layers can be oxidized porous polysilicon (OPPS) layers or oxidized porous amorphous silicon (OPAS) layers. A method of forming an OPS layer includes applying a proper current density to a silicon layer and anodizing the silicon layer using a solution mixing hydrogen fluoride (HF) and ethanol to change the silicon layer into a porous layer. The anodized silicon layer is electrochemically oxidized and is changed into the OPS layer having a predetermined thickness.

The electron emission amplification layers 125b can have a metal-insulator-metal (MIM) structure. The MIM structure includes a thin insulating layer. The thickness of the insulating layer is relevant to increase electron emission efficiency of the electron emission members 125 having the MIM structure. The insulating layer can be formed of, for example, one of Al₂O₃, Si₃N₄, SiO₂, etc., and must be thin enough to allow tunnelling. However, the insulating layers must be sufficiently thick not to break when voltages are applied to ends of the base electrodes 125a and emission electrodes.

The electron emission amplification layers 125b can be formed of a boron nitride bamboo shoot (BNBS). The BNBS has transparent properties over a wavelength range of from about 380 to about 780 nm, which is a visible light range, and good electron emission characteristics since it has negative electronic affinity. The BNBS formed in the sustain electrodes has very sharp ends, and thus it produces a strong electric field, thereby maintaining a sustain discharge at a low voltage.

The electron emission amplification layers 125b can be formed of carbon nanotubes (CNTs). However, the present embodiments are not limited thereto. The electron emission amplification layers 125b can be formed of a material that amplifies electron emission and generates an electron beam. The electron emission amplification layers 125b can be also formed of a material such as MgO for reducing the discharge voltage.

FIGS. 3 through 5 are respective cross-sectional views of PDPs according to other embodiments. Referring to FIGS. 3 through 5, the electron emission members 125 can further comprise emission electrodes 125c disposed on the electron emission amplification layers 125b. The discharge electrodes 125 can be formed of ITO or fine wire mesh. The emission electrodes 125c can be thin enough to allow tunneling. However, the emission electrodes 125c should be thin, but thick enough not to break due to deterioration due to collisions with electrons. The emission electrodes 125c can be formed of Au/Pt/Ir, Pt/Ti, tungsten silicide, etc. A direct current is supplied between the base electrodes 125a and the emission electrodes 125c such that a voltage of the emission electrodes 125c is greater than that of the base electrodes 125a. The electron emission members 125 can control a voltage applied to the electron emission amplification layers 125b to control the energy of emitted electrons.

A discharge gas of a general PDP can be a mixture containing one or more of Ne gas, He gas, and Ar gas mixed with Xe gas. However, the electron beam emitted from the electron emission member 125 of the current embodiment excites a gas that in turn generates ultraviolet rays. That is, various gases including N₂, deuterium, carbon dioxide, hydrogen gas, carbon monoxide, Kr, etc. and air at atmospheric pressure can be used instead of gases including Xe. Therefore, the PDPs according to some embodiments can use discharge gases used by general PDPs as well as other gases.

The function and operation of the PDPs will now be described. First, the PDPs perform an initial reset operation to produce wall charges in each of the discharge cells 114. When an operating voltage is applied between the X and Y electrodes 121 and 122 in a selected discharge cell, the discharge between the X and Y electrodes 121 and 122 is performed. When the discharge is performed, discharge gas particles of the discharge cells 114 and charges collide, thereby generating plasma. The phosphor layers 115, which cover the sidewalls and bottom surface of the barrier ribs 113, absorb VUV rays emitted when discharge gas atoms excited in the plasma are stabilized. The absorbed VUV rays excite electrons in the phosphor layers 115, and the excited electrons are stabilized, thereby emitting visible light. The emitted visible light from the discharge cells 114 transmit through the second substrate 120, thereby forming an image.

When an alternating current voltage (for example, ranging between 0 V and 200 V) is applied to the X electrodes 121 and the Y electrodes 122, an electric field is formed between a portion of a dielectric layer corresponding to the X electrodes 121 and a portion of the dielectric layer corresponding to the Y electrodes 122 in the discharge cells 114, such that electrons flow from the base electrodes 125a on the Y electrodes 122 to the electron emission amplification layers 125b and are accelerated or amplified to emit the electron beam into the discharge cells 114. If the voltage applied between the X and Y electrodes 121 and 122 is reversed, the electrons are accelerated or amplified through the electron emission member 125 on the X electrodes 121 to emit the electron beam into the discharge cells 114. The emitted electron beam excites the gas and the exited gas is stabilized to emit ultraviolet rays. The ultraviolet rays excite the phosphor layers 115 to emit visible light.

With regard to the PDP illustrated in FIG. 3, if a predetermined voltage is applied between the base electrodes 125a and the emission electrodes 125c, an electric field is formed between the base electrodes 125a and the emissionemission electrodes 125c, and electrons flow from the base electrodes 125a and are emitted as electron beams into the discharge cells 114 through the emissionemission electrodes 125c. The energy of the electron beams may be greater than the energy necessary to excite the discharge gas and less than the energy necessary to ionize the gas.

That is, in addition to the VUV rays generated when discharge gas atoms ionized by the plasma discharge are stabilized, the electron beams that are accelerated and emitted through the electron emission amplification layers 125 further excite the discharge gas, resulting in the generation of additional VUV rays. Also, the electron beams that are accelerated through the emission amplification layers 125 such as the OPS layers in the discharge cells to augment the discharge, thereby realizing high brightness and high luminescence efficiency. Although the PDPs illustrated in FIGS. 1 through 5 are alternating current type PDPs including the dielectric layers 112 and 123, the present embodiments are not limited thereto. That is, the present embodiments can be applied to a direct current type PDP in which the X and Y electrodes 121 and 122 cross each other and in which discharge is performed directly between the X and Y electrodes 121 and 122. In this case, the electron emission members 125 are formed on the surfaces of the X and Y electrodes 121 and 122. The X and Y electrodes 121 and 122 serve as the base electrodes 125a, and thus the base electrodes 125a are not required.

FIG. 6A is a cross-sectional view of a PDP on which a test to determine luminous efficiency according to beam current density was performed, and FIG 6B is a graph of the results of the test. Referring to FIG. 6A, the electron emission members 125 are formed on the second dielectric layer 123 covering the X and Y electrodes 121 and 122, and have the same width as the X and Y electrodes 121 and 122. Unlike an alternating current type PDP that alternately emits the electronic beam according to pulse signals, the electronic beam is continually emitted through the electron emission members 125. Referring to FIG. 6B, the graph shows that the luminescence efficiency increases as the current density of the electron beam emitted into the discharge cells 114 is increased.

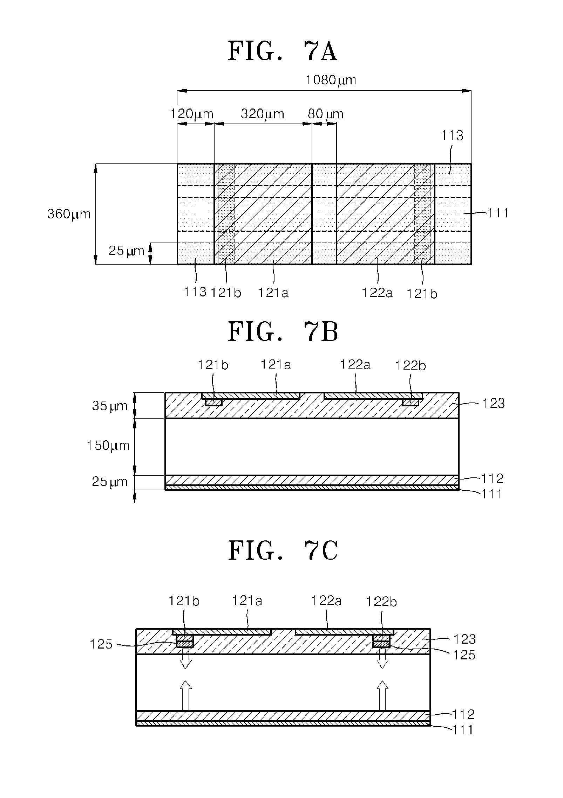

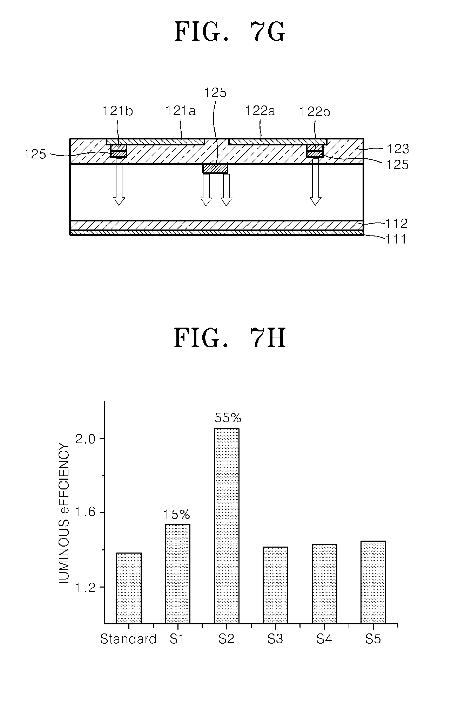

FIGS. 7A through 7G illustrate various arrangements of electron emission members used for simulations for determining luminescence efficiency when an electronic beam having a current density of 1mA/cm² is continuously emitted from the electron emission members. FIG. 7H is a graph illustrating the results of the simulations.

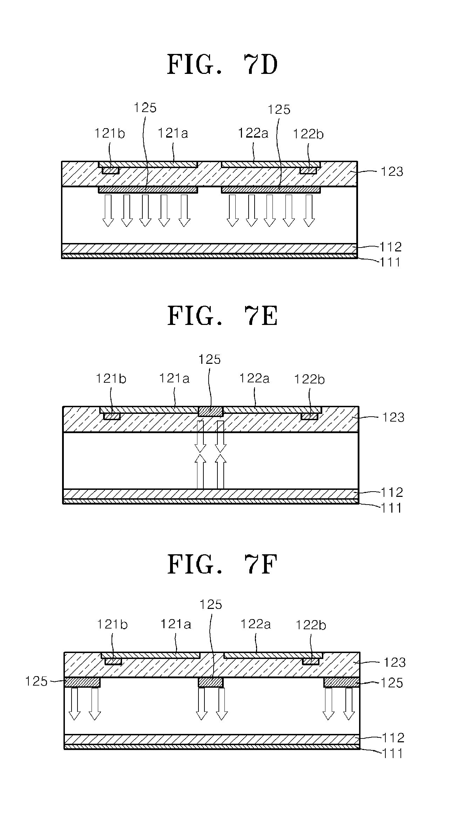

Referring to FIG. 7C, the electron emission members 125 have the same width as the bus electrodes 121b and 122b, and are formed on the bus electrodes 121b and 122b (structure S1). Referring to FIG. 7D, the electron emission members 125 have the same width as the transparent electrodes 121a and 122a, and are formed on the second dielectric layer 123 (structure S2). Referring to FIG. 7E, the electron emission members 125 are formed between the transparent electrodes 121a and 122a on the second dielectric layer 123 (structure S3). Referring to FIG. 7F, the electron emission members 125 are formed on the surface of the second dielectric layer 123 on which the transparent electrodes 121a and 122a are not formed (structure S4). Referring to FIG. 7G, the electron emission members 125 are formed between the bus electrodes 121b and 122b and the X and Y electrodes 121 and 122 on the second dielectric layer 123 (structure S5).

Referring to FIG. 7H, the graph shows that the luminescence efficiencies in the structures S1 and S2 illustrated in FIGS. 7C and 7D are respectively 15% and 55% greater than the luminescence efficiency of a standard structure. However, since the electron emission members 125 block visible light in a backlit PDP, the electron emission members 125 having the structure S1 is advantageous. Therefore, the electron emission members 125 may have the same width as the bus electrodes 121a and 122a and be formed on the bus electrodes 121a and 122a, or have the same width as the transparent electrodes 121a and 122a and correspond to the transparent electrodes 121a and 122a.

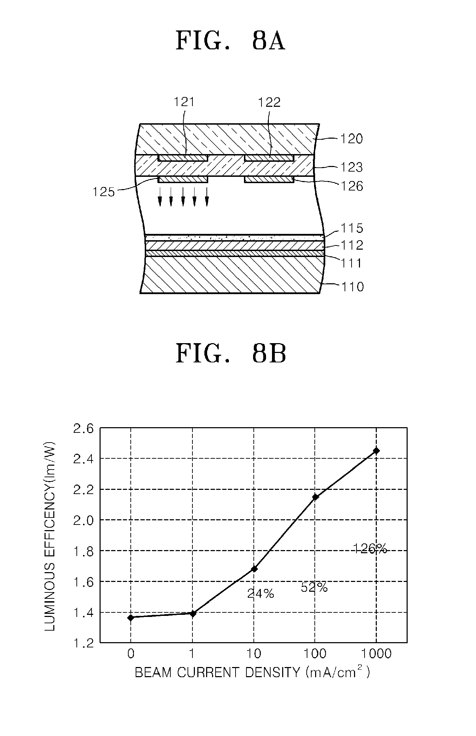

FIG. 8A illustrates an arrangement of electron emission members used for simulation for determining luminous efficiency, wherein the electrons being emitted from the electron emission member is of negative voltage above the predetermined voltage. FIG. 8B is a graph of the results of the test performed on the PDP illustrated in FIG. 8A. Referring to FIG. 8A, the electron emission members 125 have the same width as the X and Y electrodes 121 and 122, and are formed on the second dielectric layer 123 covering the X and Y electrodes 121 and 122 to correspond to the X and Y electrodes 121 and 122. In the simulation, alternate negative pulse signals are applied to the electron emission member and the electron beam is supposed to be emitted from the electron emission member 125 having a negative voltage of an electric field of more than 3 V/µm. Referring to FIG. 8B, the graph shows that the luminescence efficiency of the discharge cells 114 increases as the current density of the electron beam increases. This result is the same as the result of the simulation described above with reference to FIGS. 6A and 6B in which the electron beam is emitted from both electron emission members 125. The luminescence efficiency of the discharge cells 114 is increased by the electron emission member 125.

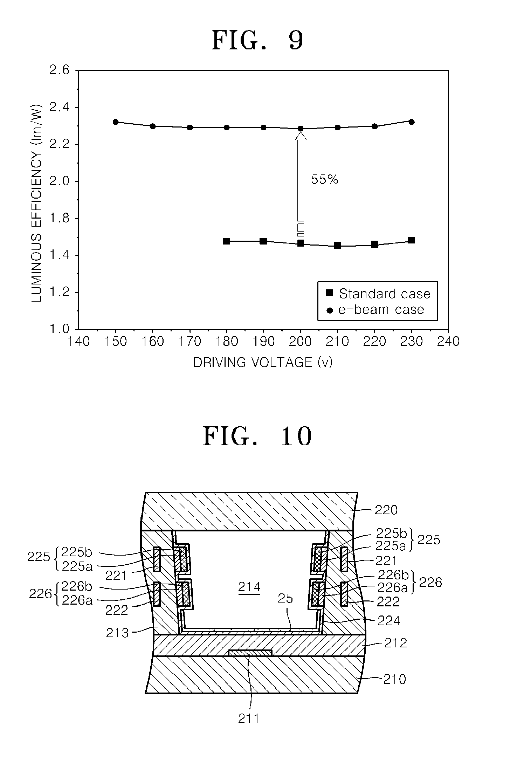

FIG. 9 is a graph of luminescence efficiency according to discharge firing voltage when an electron beam having a current density of 100 mA/cm² and emitted from the electron emission member to which more than 3V/µm of an electric field is applied in the alternating current type PDP illustrated in FIG. 8A is used and when no electron beam is used. Referring to FIG. 9, the graph shows that in a standard case using a standard structure, a driving voltage of 180 V is required to initiate a discharge, whereas, when e-beam produced by the electron emission member 125 is used, a driving voltage of 150 V is required to initiate discharge. Thus the driving voltage is reduced by about 30 V. Also, when the driving voltage is 200 V, the luminescence efficiency was increased by 55%.

FIGS. 10 through 17 are cross-sectional views of PDPs according to various embodiments. Like reference numerals in FIGS. 10 through 17 denote like elements, and thus their description will not be repeated. The differences between the PDP illustrated in FIGS. 1 and 2 and the PDPs illustrated in FIGS. 10 through 17 will now be described.

Referring to FIG. 10, the PDP comprises a first substrate 210, a second substrate 220, barrier ribs 213, two pairs of sustain electrodes 221 and 222, a first dielectric layer 212, an address electrode 211, a second dielectric layer 22, a phosphor layer 215, a protective layer 224, and electron emission members 225 and 226. The barrier ribs 213 are interposed between the first substrate 210 and the second substrate 220, and are formed of a dielectric substance. The two pairs of sustain electrodes 221 and 222 are disposed in the barrier ribs 213. The dielectric substance prevents the barrier ribs 213 from being damaged by the collision of charged particles on the sustain electrodes 221 and 222, and allow wall charges to accumulate thereon by inducing the charge particles. The dielectric substance may be one of PbO, B₂O₃, SiO₂, etc.

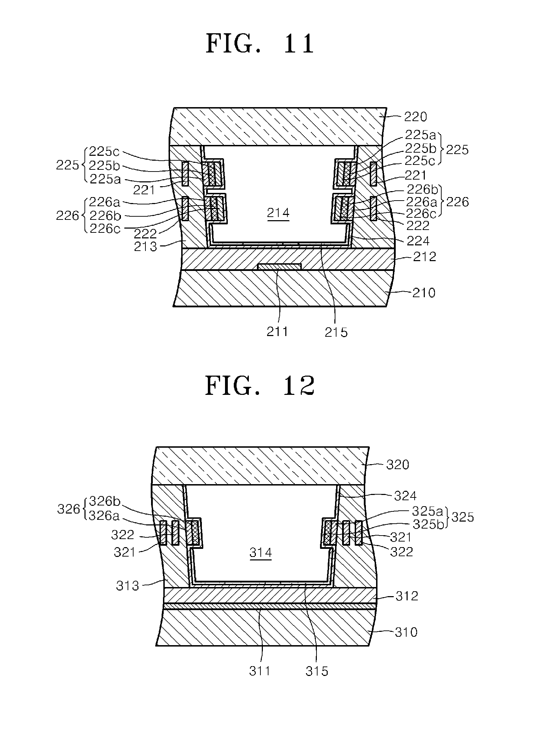

The sustain electrodes 221 and 222 disposed in the barrier ribs 213 surround the discharge cell 214 and cross the address electrode 211. Since the sustain electrodes 221 and 22 are disposed in the barrier ribs 213, common electrodes 221 and scan electrodes 222 constituting the sustain electrodes 221 and 222 are not transparent, and can be formed of a material including a conductive metal such as, for example, Ag, Al, Cu, etc. In FIGS. 10 and 11, the sustain electrodes 221 and 222 have a rectangular cross-section, but the present embodiments are not limited thereto. That is, the sustain electrodes 221 and 222 can have a variety of cross-sections as long as they can surround the discharge cell 214. Each of the PDPs in FIGS. 10 and 11 performs the sustain discharge throughout the entire discharge cell 214, and thus a discharge area is relatively increased, the PDP can operate at a low voltage, and luminescence efficiency is increased. Since the barrier ribs 213 provide the function of the second dielectric layer 123 in the above described embodiments covering the sustain electrodes 221 and 222, the PDPs shown in FIGS. 10 and 11 do not require second dielectric layer.

The electron emission members 225 and 226 respectively comprise base electrodes 225a and 226a that are disposed on the barrier ribs 213 and correspond to the sustain electrodes 221 and 222, and electron emission amplification layers 225b and 226b that are formed on the base electrodes 225a and 226a and have the same width as the base electrodes 225a and 226a. The base electrodes 225a and 226a serve as cathode electrodes providing electrons to the electron emission amplification layers 225b and 226b. The base electrodes 225a and 226a do not need to be formed of a transparent conductive material since they are not disposed on the first substrate 210 or the second substrate 220. As in the PDP illustrated in FIGS. 1 and 2, the electron emission amplification layers 225b and 226b can be formed of a material that amplifies emitted electrons and generates an electron beam such as an OPS, an MIM, a BNBS, a CNT, etc.

Referring to FIG. 11, the electron emission members 225 and 226 can further respectively comprise emissionemission electrodes 225c and 226c disposed in the electron emission amplification layers 225b and 226b. The emission electrodes 225c and 226c can be formed of ITO or fine wire mesh. The sidewalls of the barrier ribs 213 and the electron emission members 225 and 226 can be covered by the protective layer 224. The protective layer 224 is formed of MgO, which prevents the barrier ribs 213 formed of a dielectric substance and the sustain electrodes 221 and 222 from being damaged due to sputtering of plasma particles, emits secondary electrons, and reduces a driving voltage. In the PDPs of FIGS. 10 and 11, the phosphor layer 215 is coated on the inner walls of the discharge cells 214 and the first dielectric layer 212, but the present embodiments are not limited thereto. That is, the phosphor layer 215 can be coated in the etched second substrate 220, and can have a variety of other structures. As with the PDP illustrated in FIGS. 1 and 2, the phosphor layer 215 can be at least one of a PL phosphor layer, a CL phosphor layer, and a QD.

The function and operation of the PDPs illustrated in FIGS. 10 and 11 will now be described. An electron beam is emitted throughout the entire discharge cell 214 by the electron emission members 225 and 226, and thus high luminescence efficiency is obtained at a low voltage. The remaining functions and operations of the PDPs illustrated in FIGS. 10 and 11 are similar to those of the PDP illustrated in FIGS. 1 and 2.

The PDPs illustrated in FIGS. 10 and 11 are reflective PDPs in which visible light generated by the discharge are excited the phosphor layer 215, reflected, and transmitted through the second substrate 220, but the present embodiments are not limited thereto. The principles of the PDPs illustrated in FIGS. 10 and 11 can also be applied to backlit PDPs. In this case, the address electrode 211 may be formed of a transparent conductive material to transmit visible light.

The PDPs illustrated in FIG. 12 are alternating current (AC) type 3D facing discharge PDPs. The PDP of FIG. 12 comprises a first substrate 310, a second substrate 320, barrier ribs 313, two pairs of sustain electrodes 321 and 322, a first dielectric layer 312, an address electrode 311, a phosphor layer 315, a protective layer 324, and electron emission members 325 and 326.

The two pairs of sustain electrodes 321 and 322 are discharge electrodes in the form of strips and disposed in the barrier ribs 313, include common electrodes 321 and scan electrodes 322 that are spaced apart from each other, and cross the address electrode 311. The electron emission members 325 and 326 respectively comprise base electrodes 325a and 326a that are disposed on the barrier ribs 313 and correspond to the common electrodes 321 and the scan electrodes 322, and electron emission amplification layers 325b and 326b that are formed on the base electrodes 325a and 326a and have the same width as the base electrodes 325a and 326a. The base electrodes 325a and 326a serve as cathode electrodes providing electrons to the electron emission amplification layers 325b and 326b. The base electrodes 325a and 326a do not need to be formed of a transparent conductive material since they are not disposed on the first substrate 310 and the second substrate 320. As with the PDP illustrated in FIGS. 1 and 2, the electron emission amplification layers 325b and 326b can be formed of a material that amplifies emitted electrons and generates an electron beam such as an OPS, an MIM, a BNBS, a CNT, etc.

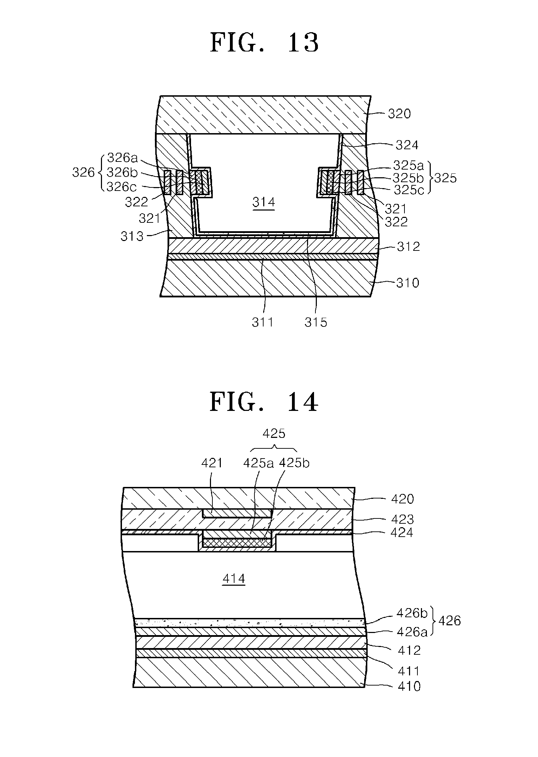

In the embodiment illustrated in FIG. 13, the electron emission members 325 and 326 respectively further comprise emission electrodes 325c and 326c disposed on the electron emission amplification layers 325b and 326b. The emission electrodes 325c and 326c can be formed of ITO or fine wire mesh. The protective layer 324 can cover the sidewalls of the barrier ribs 313 and the electron emission members 325 and 326.

The function and operation of the PDPs illustrated in FIGS. 12 and 13 will now be described. After an initial reset operation is performed, and wall charges are formed in the discharge cells 314, a discharge is initiated between the sustain electrodes 321 and 322 in the discharge cell 314. The common electrodes 321 and the scan electrodes 322, which facilitate the sustain discharge, are disposed in the barrier ribs 313, and thus the sustain discharge is a facing discharge that is not performed on a surface. When an AC voltage is applied between the common electrodes 321 and the scan electrodes 322, an electric field in the discharge cell 314 between the common electrodes 321 and the scan electrodes 322 regularly reverses direction.

Therefore, electrons flow from the base electrode 325a adjacent to the common electrodes 321 to the electron emission amplification layer 325b and are accelerated or amplified to form the electron beam in the discharge cell 314. When the voltage between the sustain electrodes 321 and 322 is reversed, the electrons are accelerated or amplified by the electron emission members 325 adjacent to the scan electrodes 322 to emit the electron beam into the discharge cell 314. The emitted electron beam excites a gas and the excited gas stabilizes to emit ultraviolet rays. The ultraviolet rays excite the phosphor layers 315 to emit visible light.

The facing discharge PDP has sufficient space between the sustain electrodes 321 and 322, which facilitate the sustain discharge, and thus has high luminescence efficiency. However, the driving voltage for initiating the discharge is increased due to the wide space between the sustain electrodes 321 and 322. Since the electron beam is emitted through the electron emission members 325 and 326, the driving voltage for initiating the discharge is reduced and luminescence efficiency is increased. Other functions and operations of the PDPs illustrated in FIGS. 12 and 13 are identical to those of the embodiments illustrated in FIG. 1, 2, 10, and 11.

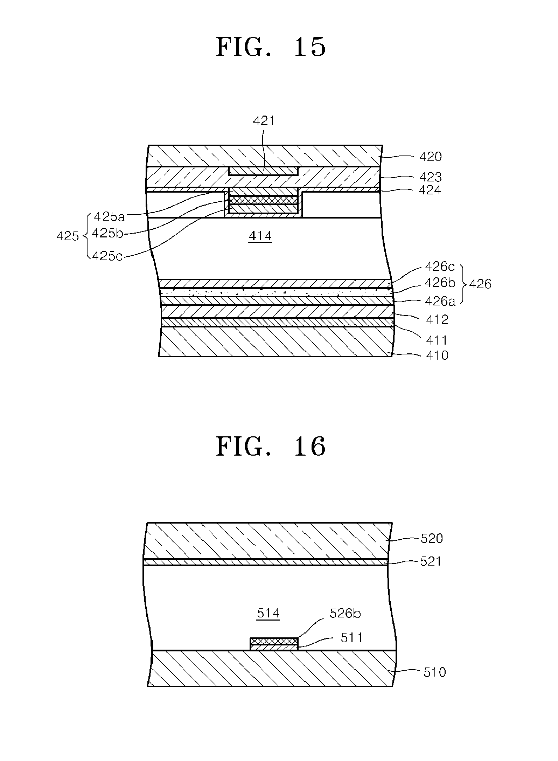

The PDPs of FIGS. 14 and 15 are AC 2D facing discharge PDPs. The PDP of FIG. 14 comprises a first substrate 410, a second substrate 420, barrier ribs (not shown), a first discharge electrode 411, a second discharge electrode 421, a first dielectric layer 412, a second dielectric layer 423, a phosphor layer 415, a protective layer 424, and electron emission members 425 and 426.

The first discharge electrode 411 is disposed on the upper surface of the first substrate 410. The second discharge electrode 421 is disposed on the bottom surface of the second substrate 420 and crosses the first discharge electrode 411. The first discharge electrode 411 and the second discharge electrode 421 serve as a scan electrode and an address electrode, respectively, or vice versa. The first discharge electrode 411 and the second discharge electrode 421 form strips, but the present embodiments are not limited thereto. That is, the first discharge electrode 411 and the second discharge electrode 421 can form various patterns, including a zigzag.

The electron emission members 425 and 426 respectively comprise base electrodes 425a and 426a that are disposed on the second discharge electrode 421 and the second dielectric layer 412 and correspond to the second discharge electrode 421 and the first discharge electrode 411, and electron emission amplification layers 425b and 426b that are formed on the base electrodes 425a and 426a and have the same width as the base electrodes 425a and 426a. The base electrodes 425a and 426a serve as cathode electrodes providing electrons to the electron emission amplification layers 425b and 426b. The base electrodes 425a and 426a may be formed of a transparent conductive material to transmit visible light. As with the PDP illustrated in FIGS. 1 and 2, the electron emission amplification layers 425b and 426b can be formed of a material that amplifies emitted electrons and generates an electron beam such as an OPS, an MIM, a BNBS, a CNT, etc.

In the PDP illustrated in FIG. 15, the electron emission members 425 and 426 respectively further comprise emission electrodes 425c and 426c disposed on the electron emission amplification layers 425b and 426b. The emission electrodes 425c and 426c can be formed of ITO or fine wire mesh. The phosphor layer 415 can be formed in a variety of locations including on the barrier ribs of the discharge cell 414. As in the PDP illustrated in FIGS. 1 and 2, the phosphor layer 415 can be at least one of a PL phosphor layer, a CL phosphor layer, and a QD.

The function and operation of the PDPs illustrated in FIGS. 14 and 15 will now be described. After an initial reset operation is performed, and wall charges are formed in the discharge cell 414, a predetermined AC voltage is applied between the first and second discharge electrodes 411 and 421, an electric field in the discharge cell 314 between the first discharge electrode 411 to the second discharge electrode 421 periodically changes direction.

Therefore, electrons flow from the base electrode 426a on the first discharge electrode 411 (but only electron emitter 425 is above the first discharge electrode 411) to the electron emission amplification layers 425b and 426b and are accelerated or amplified to produce the electron beam in the discharge cell 414. When the voltage between the first and second discharge electrodes 411 and 421 is reversed, electrons are accelerated or amplified by the electron emission member 425 on the second discharge electrode 421 (but only electron emitter 425 is above the second discharge electrode 421) to form the electron beam in the discharge cell 414. Since the electron beam is emitted through the electron emission members 425 and 426, the driving voltage required to initiate the discharge is reduced and luminescence efficiency is increased. Other functions and operations of the PDPs illustrated in FIGS. 14 and 15 are the same as those of the PDPs illustrated in FIGS. 1, 2, 10, 11, 12, and 13.

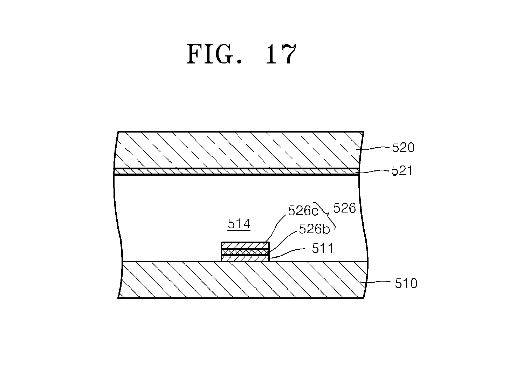

The PDPs illustrated in FIGS. 16 and 17 are direct current (DC) 2D facing discharge PDPs. The PDP of FIG. 16 comprises a first substrate 510, a second substrate 520, a first discharge electrode 511, a second discharge electrode 521, a phosphor layer (not shown), and an electron emission member 526.

The first discharge electrode 511 is disposed on the upper surface of the first substrate 510. The second discharge electrode 521 is disposed on the bottom surface of the second substrate 520 and crosses the first discharge electrode 511. The first discharge electrode 511 and the second discharge electrode 521 are formed in strips, but the present embodiments are not limited thereto. That is, the first discharge electrode 511 and the second discharge electrode 521 can also have various patterns including a zigzag.

The electron emission member 526 comprises an electron emission amplification layer 526b that is formed on the first discharge electrode 511 and has the same width as the first discharge electrode 511. The first discharge electrode 511 contacts the electron emission member 526, is a base electrode 526a of the electron emission member 526, and serves as a cathode electrode. Therefore, a base electrode is not required. The electron emission amplification layer 526b is formed on the first discharge electrode 511 but the present embodiments are not limited thereto. For example, the electron emission amplification layer 526b can be formed on the second discharge electrode 521. In this case, the second discharge electrode 521 serves as the cathode electrode.

As in the PDP illustrated in FIGS. 1 and 2, the electron emission amplification layer 526b can be formed of a material that amplifies emitted electrons and generates an electronic beam, such as an OPS, an MIM, a BNBS, a CNT, etc. As illustrated in FIG. 15, the electron emission member 526 can further comprise a emission electrode 525c disposed on the electron emission amplification layer 526b. The emission electrode 525c can be formed of ITO or fine wire mesh. The phosphor layer 515 can be formed in a variety of locations in a discharge cell. As in the PDP illustrated in FIGS. 1 and 2, the phosphor layer 515 can be at least one of a PL phosphor layer, a CL phosphor layer, and a QD.

The function and operation of the PDPs illustrated in FIGS. 16 and 17 will now be described. An addressing operation of selecting a discharge cell 514 for discharge is performed using a simple scan method, a self-scan method, a pulse memory drive method, etc. Thereafter, a discharge voltage is applied between the first electrode 511 and the second electrode 512 from an external power source, and electrons are emitted from the first electrode 511 serving as the cathode electrode and transmitted through the electron emission amplification layer 526b. Thus, an electron beam is accelerated or amplified and is emitted into the discharge cell 514. The emitted electrons are absorbed by the second discharge electrode 521, serving as an anode electrode.

In this regard, the discharge is performed directly between the first discharge electrode 511 and the second discharge electrode 512, causing the flow of a discharge current. To control the discharge operation, the discharge current must be properly controlled. In the PDP illustrated in FIG. 17, a proper ratio of thickness of the first discharge electrode 511 to the thickness of the second discharge electrode 512 is selected, a doping process is controlled according to the selected ratio of thicknesses, and a predetermined DC voltage is applied to control the discharge current.

Since the electron beam is emitted through the electron emission members 526, a driving voltage for initiating the discharge is reduced and luminescence efficiency is increased. The DC 2D opposed discharge PDPs illustrated in FIGS. 16 and 17 comprise the electron emission member 526 to control the discharge current. Therefore, the DC 2D facing discharge PDPs do not comprise a resistor for controlling the discharge current, thereby reducing manufacturing time and costs. Although not shown in the drawings, an electron emission member for improving the electron emission characteristics can be applied to a flat lamp used as a backlight for LCDs.

The flat lamp comprises upper and lower panels. The upper and lower panels face each other and form a discharge space therebetween. A plurality of spacers are interposed between the upper and bottom panels and partition the discharge space into a plurality of discharge cells. The discharge cells are filled with a discharge gas containing Ne and Xe. Alternative embodiments as a discharge gas are a mixture gas of He-Xe, a mixture gas of Ne-Ar-Xe and a mixture gas of He-Ne-Xe, etc. Phosphor layers are formed on inner walls of the discharge cells. The bottom panel comprises a bottom substrate, and at least one discharge electrode disposed on the bottom substrate. The upper panel comprises an upper substrate, and at least one discharge electrode disposed on the upper substrate. The flat lamp further comprises a base electrode that is disposed on one of the upper and bottom panels and corresponds to the discharge electrode, and an electron emission member including an electron emission amplification layer formed on the base electrode. The electron emission member can further comprise an emission electrode on the electron emission amplification layer. The emission electrode can be formed of ITO or fine wire mesh. The electron emission amplification layer can be formed of a material that amplifies emitted electrons and generates an electronic beam such as an OPS, an MIM, a BNBS, a CNT, etc. A phosphor layer can be formed in any location of the discharge cell. As in the PDP illustrated in FIGS. 1 and 2, the phosphor layer can be formed of at least one of a PL phosphor layer, a CL phosphor layer, and a QD.

In connection with the function and operation of the flat lamp, when a predetermined voltage is applied to the discharge electrode, electrons are amplified or accelerated in the electron emission amplification layer, and are emitted into the discharge cell, thereby increasing brightness and luminescence efficiency of the flat lamp.

The present embodiments provide a plasma display panel (PDP) with improved electronic emission characteristics due to the inclusion of an electronic emission member such as an oxidized porous silicon layer that reduces an operating voltage and increases luminescence efficiency.

While embodiments of the present invention have been particularly shown and described with reference to exemplary embodiments thereof, it will be understood by those of ordinary skill in the art that various changes in form and details may be made therein without departing from the scope of the present invention as defined by the following claims.

## Claims

1. A plasma display panel(PDP), comprising:
first and second substrates arranged to form a discharge space therebetween;
a plurality of barrier ribs interposed between the first and second substrates and partitioning the discharge space into discharge cells;
a plurality of pairs of discharge electrodes disposed between the first and the second substrates;
electron emission members comprising electron emission amplification layers configured to amplify the emission of electrons in discharge cells and being formed to correspond to at least a portion of the plurality of pairs of discharge electrodes;
phosphor layers formed in the discharge cells; and
a discharge gas in the discharge cells.

2. The PDP of claim 1, wherein the pair of discharge electrodes comprise a first discharge electrode disposed on the first substrate and a second discharge electrode disposed on the second substrate in a direction crossing that of the first discharge electrode.

3. The PDP of claim 2, further comprising a dielectric layer burying the first and second discharge electrodes.

4. The PDP of claim 1, wherein the pair of discharge electrodes are a pair of sustain electrodes, each of the pair of sustain electrodes being parallel to one another and disposed on the first substrate, further comprising address electrodes crossing the plurality of pairs of sustain electrodes and disposed on the second substrate.

5. The PDP of claim 1, wherein the pair of discharge electrodes are a pair of sustain electrodes, each of the pair of sustain electrodes being parallel to one another and disposed in the barrier ribs, further comprising address electrodes crossing the plurality of pairs of sustain electrodes and disposed on the second substrate.

6. The PDP of claim 4 or 5, further comprising a first dielectric layer burying the pair of sustain electrodes and a second dielectric layer burying the address electrodes.

7. The PDP of any one of the preceding claims, wherein the electron emission amplification layers are oxidized porous silicon (OPS) layers.

8. The PDP of claim 7, wherein the OPS layers are selected from the group consisting of oxidized porous poly silicon (OPPS) layers and oxidized porous amorphous silicon (OPAS) layers.

9. The PDP of any one of claims 1 to 6, wherein the electron emission amplification layers have a metal-insulator-metal (MIM) structure.

10. The PDP of any one of claims 1 to 6, wherein the electron emission amplification layers are formed of a boron nitride bamboo shoot (BNBS).

11. The PDP of any one of claims 1 to 6, wherein the electron emission amplification layers are formed of carbon nanotubes (CNTs).

12. The PDP of any one of claims 1 to 6, wherein the electron emission members further comprise emission electrodes disposed on the electron emission amplification layers.

13. The PDP of any one of the preceding claims, wherein the phosphor layers include a quantum dot (QD).

14. The PDP of any one of the preceding claims, wherein the electron emission members have the same width as the discharge electrodes.

15. The PDP of any one of the preceding claims, wherein the discharge electrodes comprise bus electrodes, and the electron emission members have the same width as the bus electrodes.

16. The PDP of any one of the preceding claims, wherein at least one protective layer is formed on the electron emission members.
